# EUROPEAN PATENT SPECIFICATION

(11) **EP 2 950 390 B1**
(45) Date of publication and mention of the grant of the patent: **05.07.2017**
(21) Application number: 14177305.1
(22) Date of filing: 16.07.2014
(51) Int. Cl.: H01Q 9/04, H01Q 21/00, H01Q 21/08

(54) **Patch array antenna and apparatus for transmitting and receiving radar signal including the same**
Patch-Gruppenantenne und Vorrichtung zum Senden und Empfangen von Radarsignalen damit
Antenne réseau à plaques et appareil pour transmettre et recevoir un signal radar comprenant celle-ci

(30) Priority: 30.05.2014 KR 20140065602
(43) Date of publication of application: 02.12.2015
(73) Proprietor: Hyundai Mobis Co., Ltd., Gangnam-gu Seoul 135-977 (KR)
(72) Inventor: Kim, Sung Joo, 446-912 Gyeonggi-Do (KR); Nam, Sang Ho, 446-912 Gyeonggi-Do (KR)
(74) Representative: Kloiber, Thomas

(56) References cited:
- KR-A- 20100 113 347
- CHEN Z ET AL: "A taper optimization for pattern synthesis of microstrip series-fed patch array antennas", WIRELESS TECHNOLOGY CONFERENCE, 2009. EUWIT 2009. EUROPEAN, IEEE, PISCATAWAY, NJ, USA, 28 September 2009 (2009-09-28), pages 160-163, XP031549030, ISBN: 978-1-4244-4721-3

## Description

### TECHNICAL FIELD

The present invention relates to a patch array antenna and an apparatus for transmitting and receiving a radar signal including the same and more particularly, to a patch array antenna which is available in a millimeter frequency band and an apparatus for transmitting and receiving a radar signal including the same.

### BACKGROUND ART

Recently, a study on a detecting system which detects surroundings of a vehicle for the purpose of safety and convenience of a driver has gained ground. A vehicle detecting system is used for various purposes, for example, to detect objects around the vehicle to prevent collision with an object which is not recognized by a driver and detect an empty space to perform an automatic parking function, and provides the most essential data for automatic vehicle control.

Recently, a detection technique using a radar having an excellent detection performance as compared with a detecting sensor such as an infrared sensor or an ultrasonic sensor attracts attention and a radar is used for many vehicles for more precise detection.

A radar radiates a beam and detects the surrounding area using a reflected signal and scans the surrounding area at a minute angle so as to precisely detect the neighboring object. To this end, the radar includes an array antenna.

However, a radiation pattern of the array antenna is determined by a radiant quantity of each unit element and has a Fourier transform relationship with the radiant quantity. Therefore, in order to secure a side lobe level of a given radiation pattern, each unit element needs to adjust a radiant quantity of the unit element suitable for the side lobe level. When the radiant quantity of unit elements of the array antenna are the same, the side lobe level is approximately -13.2 dB in theory. However, generally, the radar requires a side lobe level which is lower than -13.2 dB in order to transmit a small side lobe signal, so that the radiant quantity of the unit elements need to be adjusted.

The article of CHEN Z ET AL: "A Taper Optimization for Pattern Synthesis of Microstrip Series-Fed Patch Array Antennas" in WIRELESS TECHNOLOGY CONFERENCE 2009. EUWIT 2009. EUROPEAN, IEEE, PISCATAWAY, NJ, USA, 28 September 2009, pages 160 - 163, XP031549030, and also German Unexamined Patent Application Publication No. 102010051094 both suggest antennas having directivity. However, in these publications, a travelling wave series fed array antenna in which an end terminal is grounded with a resistor so that a reflective wave is not generated is suggested. Therefore, a via for a resistor or ground needs to be implemented on a PCB. However, it is not easy to implement a resistor at a high millimeter frequency band of the vehicle radar and material cost is disadvantageously increased even when the resistor is implemented. When a via for ground is configured, the via is sensitive to a process error so that a high precision process is required. KR 2010 0113347 A discloses a series-fed patch array with patches with chamfered corners in order to radiate circularly polarized waves.

### SUMMARY OF THE INVENTION

The present invention has been made in an effort to provide a series-fed patch array antenna which modifies a width of a feeder to secure a side lobe level without changing a radiator and an apparatus for transmitting and receiving a radar signal including the same. As a result, the present invention provides a series-fed patch array antenna according to claims 1-10 and a radar signal transmitting and receiving apparatus according to claims 11 and 12.

### BRIEF DESCRIPTION OF THE DRAWINGS

FIG. 1 is a conceptual diagram of a vehicle in which a radar according to an exemplary embodiment of the present invention is mounted.
FIG. 2 is a diagram of a fist exemplary embodiment of an antenna and an RF module which configure a millimeter wave radar for a vehicle.
FIG. 3 is a diagram of a second exemplary embodiment of an antenna and an RF module which configure a millimeter wave radar for a vehicle.
FIG. 4 is a conceptual diagram of a first exemplary embodiment of an antenna according to an exemplary embodiment of the present invention.
FIG. 5 is an enlarged view enlarging a first unit element and a second unit element which is adjacent to the first unit element in the antenna of FIG. 4.
FIG. 6 is a perspective view of an antenna according to an exemplary embodiment of the present invention.
FIG. 7 is a side view of an antenna according to an exemplary embodiment of the present invention.
FIG. 8 is a conceptual diagram of a second exemplary embodiment of an antenna according to an exemplary embodiment of the present invention.

It should be understood that the appended drawings are not necessarily to scale, presenting a somewhat simplified representation of various features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

### DETAILED DESCRIPTION OF THE INVENTION

The present invention suggests a series fed microstrip patch array antenna which is available at a millimeter wave band (specifically, 77 GHz).

According to the present invention, a width of a feeder is changed in order to secure a side lobe level, without changing a radiator.

According to the present invention, in order to form a radiation pattern suitable for a vehicle radar application field and simplify the manufacturing process due to a high frequency and a short wavelength, a resistor or ground is not provided at an end terminal.

The present invention has a structure which is applicable to an array antenna to implement a 45 degree polarized wave.

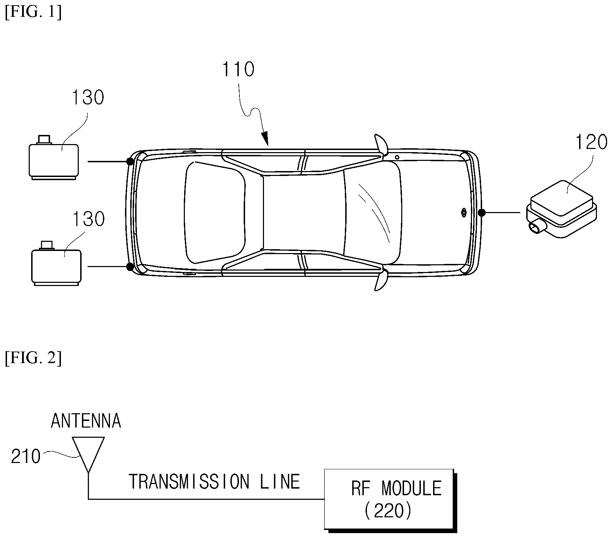

FIG. 1 is a conceptual diagram of a vehicle in which a radar according to an exemplary embodiment of the present invention is mounted.

The present invention relates to an antenna which is mounted in a radar of a vehicle 110. The radar is mounted at a front 120 or rear sides 130 of the vehicle to provide a distance and a speed of a preceding vehicle. An operational frequency of the radar is broadly allocated to a 24 GHz band and a 77 GHz band and specifically, the 77 GHz band is a millimeter wave band and is mainly applied to a front radar 120 having a long detectable range.

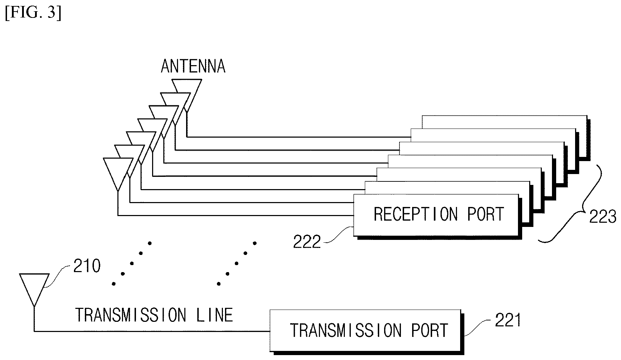

FIGS. 2 and 3 are diagrams of exemplary embodiments of an antenna and an RF module which configure a millimeter wave radar for a vehicle.

In FIG. 2, an antenna 210 transmits and receives an electromagnetic wave in a desired direction and a first RF module 220 transmits or receives a millimeter wave signal which is used for a radar. In this case, the antenna 210 is configured to be connected with the first RF module 220 using a transmission line.

FIG. 3 illustrates an antenna module including a plurality of antennas 210 and a second RF module 223 including one transmission port 221 and a plurality of reception ports 222. The plurality of antennas 210 is arranged to each other to be connected to a reception port of the second RF module 223 and extracts a transmission signal which is reflected from a target to estimate a range, an angle, and a speed of the target.

According to the exemplary embodiment of the present invention, as illustrated in FIGS. 2 and 3, as the antenna 210, a serial fed microstrip patch array antenna which adjusts a width of a feeder in order to secure a side lobe level is implemented.

Generally, as a method for adjusting radiant quantity of the radiator arranged to secure a side lobe level, there is a method for changing a width of the radiator. However, when the width of the radiator is changed, a resonance characteristic of the radiator is also changed so that the radiator needs to be redesigned in order to equalize resonance frequencies of radiators having different widths.

However, according to the exemplary embodiment of the present invention, the side lobe level is secured by maintaining all the radiators with the same shape and changing a width of the feeder to equally change the radiant quantity of the radiators. Therefore, according to the exemplary embodiment of the present invention, the radiator does not need to be redesigned so that design easiness is relatively large and when a shape of the radiator is changed for a specific polarization characteristic, all radiators have the same radiating characteristic.

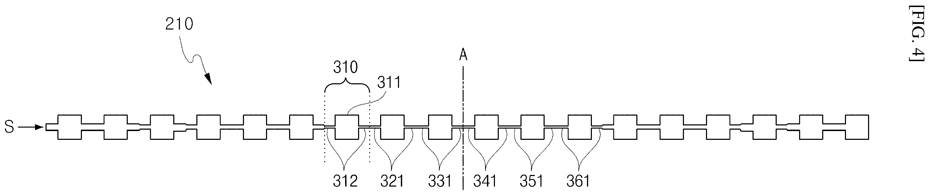

FIG. 4 is a conceptual diagram of a first exemplary embodiment of an antenna according to an exemplary embodiment of the present invention.

According to the present invention, an antenna 210 is configured by an array of radiators which form a desired radiation pattern and feeders which connect the radiators. Specifically, the antenna 210 is configured by an array of unit elements 310 each including a specific radiator 311 and a feeder 312 which connects adjacent radiators at both end terminals of the radiator 311.

In the antenna 210, a radiator at an end terminal which is opposite to a radiator to which a signal S is applied is open.

The antenna 210 is configured by feeders 312, 321, 331, 341, 351, and 361 which are symmetric with each other with respect to a center A of a plurality of radiators. That is, with respect to a point A, a first feeder 312 has the same width as a sixth feeder 361, a second feeder 321 has the same width as a fifth feeder 351, and a third feeder 331 has the same width as a fourth feeder 341. When an odd number of radiators are arranged, feeders of a radiator which are opposite to each other with respect to a radiator at a center A have the same width.

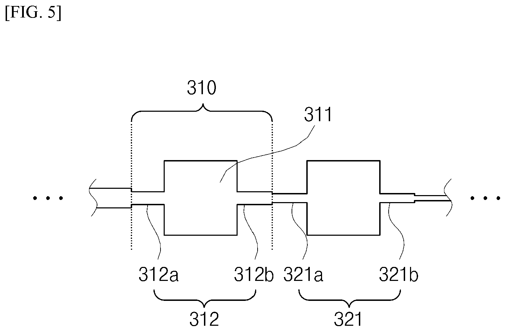

FIG. 5 is an enlarged view enlarging a first unit element 310 and a second unit element which is adjacent to the first unit element 310 in the antenna of FIG. 4.

In an antenna 210 according to an exemplary embodiment of the present invention, all radiators have the same configuration. When a 1a-th feeder 312a and a 1b-th feeder 312b which are formed at both sides of a radiator 311 of a first unit element 310 are configured to have the same width, similarly, a 2a-th feeder 321a and a 2b-th feeder 321b which are formed at both sides of a radiator of a second unit element which is adjacent to the first unit element 310 are configured to have the same width.

The antenna 210 according to the exemplary embodiment of the present invention adjusts a width of each feeder in order to secure a side lobe level of an array antenna configured by an array of radiators. Accordingly, the 1a-th feeder 312a and the 1b-th feeder 312b are configured to have the same width and the 2a-th feeder 321a and the 2b-th feeder 321b are configured to have the same width but the first feeders 312a and 312b have a different width from that of the second feeders 321a and 321b.

In the meantime, a length of feeders having different thicknesses which are connected between the radiators is approximately half a guided wavelength for feeding the same phase to the radiator.

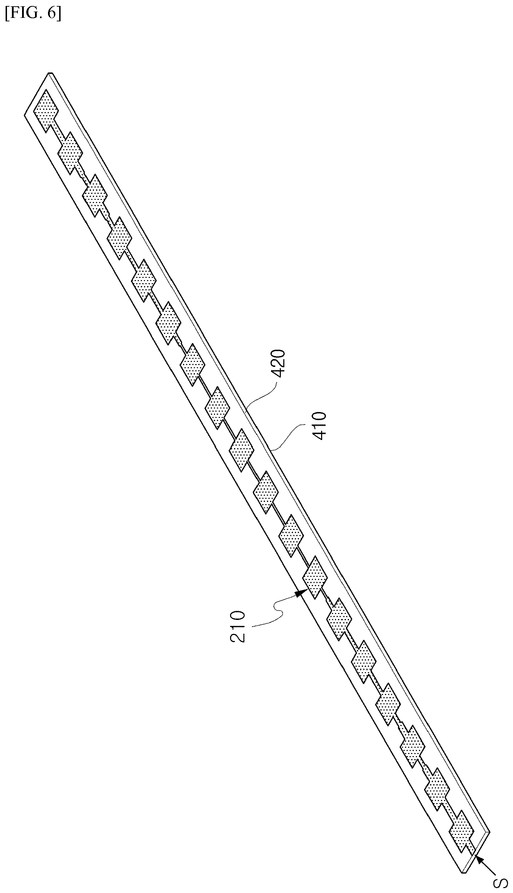

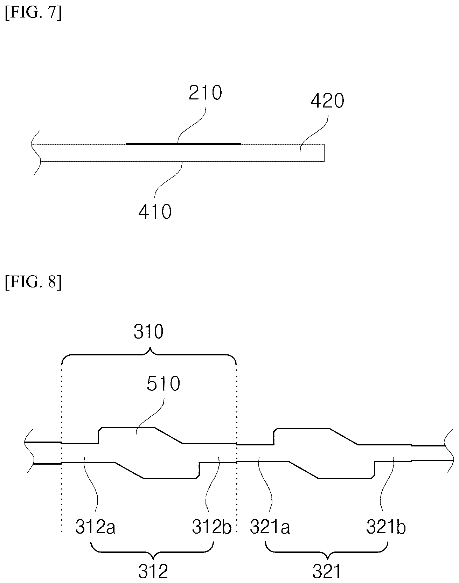

FIG. 6 is a perspective view of an antenna according to an exemplary embodiment of the present invention and FIG. 7 is a side view of an antenna according to an exemplary embodiment of the present invention.

As illustrated in FIGS. 6 and 7, an antenna 210 according to an exemplary embodiment of the present invention is configured on a dielectric substrate 420, such as Teflon, having a ground plane 410. This uses a general PCB process so that mass production may be achieved.

FIG. 8 is a conceptual diagram of a second exemplary embodiment of an antenna according to an exemplary embodiment of the present invention.

FIG. 8 illustrates a modified radiator of FIG. 4. A first radiator 311 may be applied as a second radiator 510 which is partially modified as an example to be carried out. The second radiator 510 illustrated in FIG. 8 has a structure in which opposite corners of the radiator are chamfered in order to implement 45 degree polarization which is a requirement of an antenna of a vehicle radar. In the example to be carried out, similarly to the radiator 311 of FIG. 4, second radiators 510 to be modified have a similar structure without causing significant structural modification when the second radiators are arranged. Therefore, when the antenna 210 is designed, the same radiators are used and only a width of a feeder is modified to adjust a side lobe level.

The exemplary embodiment of the present invention has been described above with reference to FIGS. 1 to 8. Hereinafter, a preferred embodiment of the present invention which may be implemented by the exemplary embodiment of the present invention will be summarized.

A patch array antenna according to a preferred embodiment of the present invention includes a first unit element and a second unit element.

The first unit element includes a first patch which creates a predetermined radiation pattern and first feeders which are formed at both sides of the first patch and have the same width. The patch is the same concept as a radiator.

The second unit element is adjacent to the first unit element and includes a second patch which creates a radiation pattern and second feeders which are formed at both sides of the second patch and have the same width. However, the width of the second feeders is different from the width of the first feeders.

In the first unit element, the width of the first feeder is adjusted in accordance with a radiant quantity related with the radiation pattern. For example, the width of the first feeder may be adjusted to be in inverse proportion to the radiant quantity. As an example to be carried out, as the width of the first feeder is decreased, the radiant quantity is increased but as the width of the first feeder is increased, the radiant quantity is relatively reduced.

In the above description, the first feeders may have a larger width than the second feeders.

The patch array antenna according to the present invention may further include a third unit element.

The third unit element is adjacent to the second unit element, and includes a third patch which creates a radiation pattern and third feeders which are formed at both sides of the third patch and have the same width.

The first feeders of the first unit element, the second feeders of the second unit element, and the third feeders of the third unit element have different widths from each other and the widths of the feeders are adjusted in accordance with the radiant quantity of individual unit elements in order to secure a side lobe level of the array antenna. As an example to be carried out, the first feeders of the first unit element which is disposed at one side have the largest width, the third feeders of the third unit element which is disposed at the other side have the smallest width, and the second feeders of the second unit element which is disposed between the first unit element and the third unit element may have a width which is smaller than that of the first feeders and larger than that of the third feeders.

The patch array antenna according to the present invention may further include a fourth unit element and a fifth unit element.

The fourth unit element is adjacent to the second unit element, and includes a fourth patch which creates a radiation pattern and fourth feeders which are formed at both sides of the fourth patch and have the same width.

The fifth unit element is adjacent to the fourth unit element, and includes a fifth patch which creates a radiation pattern and fifth feeders which are formed at both sides of the fifth patch and have the same width.

A width of each feeder is adjusted in accordance with a radiant quantity of each unit element. As an example to be carried out, the fourth feeders have the same width as the second feeders and the fifth feeders have the same width as the first feeders.

In the meantime, the first unit element and the second unit element may be formed on a dielectric substrate. Specifically, the first unit element and the second unit element may be formed on the dielectric substrate as a Teflon type or a printed circuit board (PCB) type on which a ground plane is formed.

In the meantime, the first patch and the second patch may be formed to have the same shape as any one of a polygon and a polygon in which opposite corners are chamfered.

In the meantime, the first feeders and the second feeders may have the same length based on a guided wavelength.

The patch array antenna according to the present invention may be implemented by a microstrip antenna having a series fed structure.

In the meantime, the patch array antenna may include N patches including the first patch and the second patch. In this case, among the N patches, one side of each of patches which are disposed at an end terminal is open. That is, a patch which is not disposed at an end terminal generally have two feeders at both sides of the patch, but a patch which is disposed at an end terminal have one feeder at one side of the patch, and the one feeder is located at the one side which is connected to the other patch. As an example to be carried out, an end terminal which is opposite to the feeder of the array antenna is disposed so as not to include a feeder at the end terminal and be open.

A radar signal transmitting and receiving apparatus according to the present invention includes a radar signal generating unit and a patch array antenna. Such a radar signal transmitting and receiving apparatus may be mounted in a vehicle.

The radar signal generating unit generates a radar signal and is the same concept as an RF module.

The patch array antenna outputs a radar signal which is generated by the radar signal generating unit to the outside and receives a radar signal which is reflected to return. A characteristic of the patch array antenna has been described in detail above so that detailed description thereof will be omitted.

In the meantime, the patch array antenna may output the radar signal as a polarized wave signal having a predetermined angle. Desirably, the patch array antenna may output the radar signal as a 45 degree polarized wave signal. The 45 degree polarized wave signal may suppress mutual interference because polarized waves between approaching opposite radars are perpendicular to each other. claims which follow.

## Claims

1. A series-fed patch array antenna comprising
a dielectric substrate (420) having a ground plane (410);
a predetermined number of patches (311) configured on the dielectric substrate (420), the patches (311) having the same shape and being connected by respective feeders (312, 321, 331, 341, 351, 361);
wherein the predetermined number of patches (311) includes:
a first unit element (310) which includes a first patch (311) configured to create a predetermined radiation pattern and first feeders (312a, 312b) which are formed at both sides of the first patch (311) and have the same width;
a second unit element which is adjacent to the first unit element (310) and includes a second patch also configured to create the predetermined radiation pattern and second feeders (321a, 321b) which are formed at both sides of the second patch and have the same width,
wherein the width of the second feeders (321a, 321b) is different from the width of the first feeders (312a, 312b),
and at least one patch disposed at an end terminal of the series-fed patch array, wherein the at least one patch has exactly one feeder connecting a first side of the at least one patch to another patch of the predetermined number of patches,
and wherein the at least one patch has an open end on a second side opposite to the first side.

2. The patch array antenna of claim 1, wherein the width of the first feeder (312) in the first unit element (310) is configured to be in accordance with a radiant quantity related with the radiation pattern.

3. The patch array antenna of claim 2, wherein the width of the first feeder (312) is configured so as to be in inverse proportion to the radiant quantity.

4. The patch array antenna of claim 1, further comprising:
a third unit element which is adjacent to the second unit element and includes a third patch configured to create a radiation pattern and third feeders (331) which are formed at both sides of the third patch and have the same width;
wherein the first feeders (312) of the first unit element (310), the second feeders (321) of the second unit element, and the third feeders (331) of the third unit element have different widths from each other and the widths of the individual feeders (312, 321, 331) are configured to be in accordance with a radiant quantity of the individual unit elements.

5. The patch array antenna of claim 1, further comprising:
a fourth unit element which is adjacent to the second unit element and includes a fourth patch configured to create a radiation pattern and fourth feeders (341) which are formed at both sides of the fourth patch and have the same width; and
a fifth unit element which is adjacent to the fourth unit element and includes a fifth patch which is configured to create a radiation pattern and fifth feeders (351) which are formed at both sides of the fifth patch and have the same width;
wherein the widths of the feeders (312, 321, 331, 341, 351) are configured to be in accordance with a radiant quantity of the unit elements.

6. The patch array antenna of claim 1, wherein the first unit clement (310) and the second unit element are formed on the dielectric substrate (420).

7. The patch array antenna of claim 6, wherein the first unit element (310) and the second unit element are formed on the dielectric substrate (420) as a Teflon type or a primed circuit board (PCB) type on which the ground plane (410) is formed.

8. The patch array antenna of claim 1, wherein all patches are formed to have the same shape as any one of a polygon and a polygon and a polygon in which opposite corners are chamfered.

9. The patch array antenna of claim 1, wherein the first feeders (312) and the second feeders (321) have the same length based on a guided wavelength.

10. The patch array antenna of claim 1, wherein the series-fed patch array antenna (210) is a microstrip antenna having a series fed structure.

11. A radar signal transmitting and receiving apparatus (120, 130), comprising:
a radar signal generating unit (220) configured to generate a radar signal; and
a series-fed patch array antenna (210) of claim 1.

12. The apparatus of claim 11, wherein the series-fed array antenna (210) is configured to output the radar signal as a polarized wave signal having a predetermined polarization angle.

## Patentansprüche

1. Seriengespeiste Patch-Array-Antenne, umfassend:
ein dielektrisches Substrat (420) mit einer Grundebene (410);
eine vorbestimmte Anzahl von Patches (311), die auf dem dielektrischen Substrat (420) angeordnet sind,
dass die Patches (311) die gleiche Form aufweisen und durch jeweilige Zuführungen (312, 321, 331, 341, 351, 361) verbunden sind;
wobei die vorbestimmte Anzahl von Patches (311) umfasst:
ein erstes Einheitselement (310), das einen ersten Patch (311) umfasst, das zur Erzeugung eines vorbestimmtes Strahlungsmuster ausgebildet ist und erste Zuführungen (312a, 312b), die an beiden Seiten des ersten Patches (311) gebildet sind und die gleiche Breite aufweisen;
ein zweites Einheitselement, das dem ersten Einheitselement (310) benachbart ist und einen zweiten Patch umfasst, das ebenfalls ausgebildet ist, das vorgegebene Strahlungsmuster zu erzeugen und zweite Zuführungen (321a, 321b), die an beiden Seiten des zweiten Patches gebildet sind und die gleiche Breite aufweisen,
wobei die Breite der zweiten Zuführungen (321a, 321 b) von der Breite der ersten Zuführungen (312a, 312b) verschieden ist,
und mindestens einen Patch, der an einem Endanschluss des seriengespeisten Patch-Arrays angeordnet ist, wobei
der mindestens eine Patch genau eine Zuführung aufweist, der eine erste Seite des mindestens einen Patches mit einem anderen Patch der vorbestimmten Anzahl von Patches verbindet,
und wobei der mindestens eine Patch ein offenes Ende auf einer zweiten Seite, gegenüberliegend zu der ersten Seite, aufweist.

2. Patch-Array-Antenne nach dem Patentanspruch 1, **dadurch gekennzeichnet, dass** die Breite der ersten Zuführung (312) in dem ersten Einheitselement (310) ausgebildet ist, einer Strahlungsmenge, die mit dem Strahlungsmuster in Beziehung steht, zu entsprechen.

3. Patch-Array-Antenne nach dem Patentanspruch 2, **dadurch gekennzeichnet, dass** die Breite der ersten Zuführung (312) derart ausgebildet ist, dass sie umgekehrt proportional zur Strahlungsmenge ist.

4. Patch-Array-Antenne nach dem Patentanspruch 1, des Weiteren umfassend:
ein drittes Einheitselement, das dem zweiten Einheitselement benachbart ist und einen dritten Patch umfasst, ausgebildet, ein Strahlungsmuster zu erzeugen und dritte Zuführungen (331), die an beiden Seiten des dritten Patches gebildet sind und die gleiche Breite aufweisen;
wobei die ersten Zuführungen (312) des ersten Einheitselementes (310), die zweiten Zuführungen (321) des zweiten Einheitselementes, und die dritten Zuführungen (331) des dritten Einheitselementes unterschiedliche Breiten voneinander aufweisen und die Breiten der einzelnen Zuführungen (312, 321, 331) ausgebildet sind,
einer Strahlungsmenge der einzelnen Einheitselemente zu entsprechen.

5. Patch-Array-Antenne nach dem Patentanspruch 1, des Weiteren umfassend:
ein viertes Einheitselement, das dem zweiten Einheitselement benachbart ist und einen vierten Patch umfasst, ausgebildet, ein Strahlungsmuster zu erzeugen und vierte Zuführungen (341), die an beiden Seiten des vierten Patches gebildet sind und die gleiche Breite aufweisen; und
ein fünftes Einheitselement, das dem vierten Einheitselement benachbart ist und einen fünften Patch umfasst, ausgebildet, ein Strahlungsmuster zu erzeugen und fünfte Zuführungen (351), die an beiden Seiten des fünften Patches gebildet sind und die gleiche Breite aufweisen;
wobei die Breiten der Zuführungen (312, 321, 331, 341, 351) ausgebildet sind, einer Strahlungsmenge der Einheitselemente zu entsprechen.

6. Patch-Array-Antenne nach dem Patentanspruch 1, **dadurch gekennzeichnet, dass** das erste Einheitselement (310) und das zweite Einheitselement auf dem dielektrischen Substrat (420) gebildet sind.

7. Patch-Array-Antenne nach dem Patentanspruch 6, **dadurch gekennzeichnet, dass** das erste Einheitselement (310) und das zweite Einheitselement auf dem dielektrischen Substrat (420) als ein Teflon-Typ oder als ein Leiterplatten (PCB) -Typ gebildet sind, auf der die Grundebene (410) gebildet ist.

8. Patch-Array-Antenne nach dem Patentanspruch 1, **dadurch gekennzeichnet, dass** alle Patches gebildet sind die gleiche Form aufzuweisen wie ein beliebiges aus einem Polygon und einem Polygon und einem Polygon, bei dem gegenüberliegende Ecken abgeschrägt sind.

9. Patch-Array-Antenne nach dem Patentanspruch 1, **dadurch gekennzeichnet, dass** die ersten Zuführungen (312) und die zweiten Zuführungen (321) die gleiche Länge aufweisen, basierend auf einer geführten Wellenlänge.

10. Patch-Array-Antenne nach dem Anspruch 1, **dadurch gekennzeichnet, dass** die seriengespeiste Patch-Array-Antenne (210) eine Mikrostreifenantenne mit einer seriengespeisten Struktur ist.

11. Radarsignal-Sende- und Empfangsvorrichtung (120, 130), umfassend:
eine Radarsignal-Erzeugungseinheit (220), die ausgebildet ist, ein Radarsignal zu erzeugen; und
eine seriengespeiste Patch-Array-Antenne (210) nach dem Patentanspruch 1.

12. Vorrichtung nach dem Patentanspruch 11, **dadurch gekennzeichnet, dass** die seriengespeiste Array-Antenne (210) ausgebildet ist, das Radarsignal als ein polarisiertes Wellensignal mit einem vorbestimmten Polarisationswinkel auszugeben.

## Revendications

1. Antenne réseau à plaques d'alimentation en série comprenant
un substrat diélectrique (420) ayant un plan de sol (410) ;
un nombre prédéterminé de plaques (311) configurées sur le substrat diélectrique (420), les plaques (311) ayant la même forme et étant connectées par des lignes d'alimentation respectives (312, 321, 331, 341, 351, 361) ;
dans laquelle le nombre prédéterminé de plaques (311) inclut :
un premier élément unitaire (310) qui inclut une première plaque (311) configurée pour créer un diagramme de rayonnement prédéterminé et des premières lignes d'alimentation (312a, 312b) qui sont formées des deux côtés de la première plaque (311) et ont la même largeur ;
un deuxième élément unitaire qui est adjacent au premier élément unitaire (310) et inclut une deuxième plaque également configurée pour créer le diagramme de rayonnement prédéterminé et des deuxièmes lignes d'alimentation (321a, 321b) qui sont formées des deux côtés de la deuxième plaque et ont la même largeur,
dans laquelle la largeur des deuxièmes lignes d'alimentation (321a, 321b) est différente de la largeur des premières lignes d'alimentation (312a, 312b),
et au moins une plaque disposée à une borne d'extrémité du réseau à plaques d'alimentation en série, dans laquelle l'au moins une plaque a exactement une ligne d'alimentation connectant un premier côté de l'au moins une plaque à une autre plaque du nombre prédéterminé de plaques,
et dans laquelle l'au moins une plaque a une extrémité ouverte sur un deuxième côté opposé au premier côté.

2. Antenne réseau à plaques selon la revendication 1, dans laquelle la largeur de la première ligne d'alimentation (312) dans le premier élément unitaire (310) est configurée pour être conforme à une quantité rayonnante relative au diagramme de rayonnement.

3. Antenne réseau à plaques selon la revendication 2, dans laquelle la largeur de la première ligne d'alimentation (312) est configurée de manière à être inversement proportionnelle à la quantité rayonnante.

4. Antenne réseau à plaques selon la revendication 1, comprenant en autre :
un troisième élément unitaire qui est adjacent au deuxième élément unitaire et inclut une troisième plaque configurée pour créer un diagramme de rayonnement et des troisièmes lignes d'alimentation (331) qui sont formées des deux côtés de la troisième plaque et ont la même largeur ;
dans laquelle les premières lignes d'alimentation (312) du premier élément unitaire (310), les deuxièmes lignes d'alimentation (321) du deuxième élément unitaire, et les troisièmes lignes d'alimentation (331) du troisième élément unitaire ont des largeurs différentes les unes des autres, et les largeurs des lignes d'alimentation individuelles (312, 321, 331) sont configurées pour être conformes à une quantité rayonnante des éléments unitaires individuels.

5. Antenne réseau à plaques selon la revendication 1, comprenant en outre :
un quatrième élément unitaire qui est adjacent au deuxième élément unitaire et inclut une quatrième plaque configurée pour créer un diagramme de rayonnement et quatre lignes d'alimentation (341) qui sont formées des deux côtés de la quatrième plaque et ont la même largeur ; et
un cinquième élément unitaire qui est adjacent au quatrième élément unitaire et inclut une cinquième plaque qui est configurée pour créer un diagramme de rayonnement et des cinquièmes lignes d'alimentation (351) qui sont formées des deux côtés de la cinquième plaque et ont la même largeur ;
dans laquelle les largeurs des lignes d'alimentation (312, 321, 331, 341, 351) sont configurées pour être conformes à une quantité rayonnante des éléments unitaires.

6. Antenne réseau à plaques selon la revendication 1, dans laquelle le premier élément unitaire (310) et le deuxième élément unitaire sont formés sur le substrat diélectrique (420).

7. Antenne réseau à plaques selon la revendication 6, dans laquelle le premier élément unitaire (310) et le deuxième élément unitaire sont formés sur le substrat diélectrique (420) en tant qu'un type Teflon ou un type de carte de circuits imprimés (PCB) sur lequel le plan de sol (410) est formé.

8. Antenne réseau à plaques selon la revendication 1, dans laquelle toutes les plaques sont formées pour avoir la même forme que l'un quelconque parmi un polygone et un polygone et un polygone dans lequel des angles opposés sont chanfreinés.

9. Antenne réseau à plaques selon la revendication 1, dans laquelle les premières lignes d'alimentation (312) et les deuxièmes lignes d'alimentation (321) ont la même longueur sur la base d'une longueur d'onde guidée.

10. Antenne réseau à plaques selon la revendication 1, dans laquelle l'antenne réseau à plaques d'alimentation en série (210) est une antenne microruban ayant une structure d'alimentation en série.

11. Appareil d'émission et de réception de signal radar (120, 130) comprenant :
une unité de génération de signal radar (220) configurée pour générer un signal radar ;
et
une antenne réseau à plaques d'alimentation en série (210) selon la revendication 1.

12. Appareil selon la revendication 11, dans lequel l'antenne réseau d'alimentation en série (210) est configurée pour délivrer en sortie le signal radar en tant que signal d'onde polarisée ayant un angle de polarisation prédéterminé.
